# EUROPEAN PATENT APPLICATION

(11) **EP 2 590 294 A1**
(43) Date of publication of application: **08.05.2013**
(21) Application number: 10854107.9
(22) Date of filing: 01.07.2010
(51) Int. Cl.: H02J 7/00

(54) **APPARATUS FOR CHARGING THIN FILM CAPACITOR**

(71) Applicant: Shimizu, Kanji, Kobe-shi, Hyogo 651-2114 (JP); Japan Silicon Electronics Technology Inc., Tokyo 105-0001 (JP); Enzo Planning Co., Ltd., Tokyo 150-0011 (JP); Takanashi, Kazuhiko, Tokyo 166-0003 (JP)
(72) Inventor: SHIMIZU, Kanji, Kobe-shi, Hyogo 651-2114 (JP)
(74) Representative: Grünecker, Kinkeldey, Stockmair & Schwanhäusser
(86) International application number: PCT/JP2010/061287
(87) International publication number: WO 2012/001810

(57) **Abstract**

It is possible to prevent overcurrent from flowing at the time of initially charging thin-film capacitors with an inexpensive configuration. There are provided a direct current power supply DC supplying direct current to plural thin-film capacitors, resistors connected in series to the respective thin-film capacitors for limiting the current value of the direct current to be supplied from the direct current power supply DC to the thin-film capacitors, and series-parallel system changeover switches SW connected in series to the respective thin-film capacitors and having one contacts establishing, when selected, a series connection short-circuiting both ends of each thin-film capacitor and other contacts establishing, when selected, parallel connections supplying direct current through the resistors to the thin-film capacitors. A charging operation switch SW1 and a discharge operation switch SW2 are switched so that, at the time of charging, current supplied to the thin-film capacitors C is suppressed by the resistors by the parallel connections and at the time of discharging, discharging is permitted by the series connection, irrespective of the resistors.

## Description

### TECHNICAL FIELD

The present invention relates to an apparatus for charging thin-film capacitors.

### BACKGROUND ART

A thin-film capacitor uses electric energy stored in collectors formed in a surface boundary between electrode and dielectric materials and has a large electric capcitance, capable of charging and discharging a huge amount of electric charge in a short time, in the order of several-thousand farads.
As usage it can be used in a wide range from small-capacity products for memory backup, medium-capacity products for use in power-assisted electric vehicles and up to large-capacity products as battery alternatives for power source, such as power supplies of electric vehicles.

The withstand voltage of a unit capacitor (also referred to as a cell) in those thin-film capacitors is dependent upon the withstand voltage of dielectric material which is a constituent element thereof, i.e. an insulator for separating electrons from holes, and thus upon its substance, thin-film thickness, homogeneity and the like. For example, titanic acid barium-based dielectric material is of about 200V.
In addition, since the thin-film capacitor may be broken down when applied by a voltage higher than the withstand voltage of its dielectric material, plural capacitors are connected In series for use in applications where a high voltage is required.

The thin-film capacitor has its planer type of structure having electrodes, an electrode collector and dielectric material formed planer. It can be of bi-polar construction having electrodes and dielectric materials alternately stacked, which is suitable for high-voltage applications.
For example, as a planer type of thin-film capacitor, a unit having 40 - 50 cells stacked to attain a withstand voltage in the order of 400V has been developed.
It is noted that, for use in power storages of medium-and large-capacity, there is adapted a module having units arranged in parallel and serial.

A thin-film capacitor C excels in rapid charge and discharge, and is therefore often used for direct current loads that require high current in a short time.
At the time of charging, high current is supplied to respective unit capacitors to enable rapid charge and discharge.
At the time of charging, a resistor R1 is additionally installed which has its characteristic appropriate for a specific thin-film capacitor to thereby optimally adjust the voltage such as to allow charging while break-down due to overvoltage is controlled.

In general, as technology for charging and discharging capacitors, there is one disclosed in, for example, patent document 1.
Patent Document 1: Japanese patent laid-open publication No. 2004-215332.

### SUMMARY OF THE INVENTION

### PROBLEM(S) TO BE SOLVED BY THE INVENTION

However, in order to initially charge the thin-film capacitor C, if the thin-film capacitor C is directly connected to a direct current power supply DC, large current would flow and sometimes exceed the allowable value of direct current for the thin-film capacitor C.
Consequently, a charging circuit (not shown) additionally provided with current regulator function has conventionally been provided, which makes the equipment expensive.

It is an object of the present invention to provide an apparatus for charging thin-film capacitors capable of preventing overcurrent from flowing at the time of initially charging the thin-film capacitors with an inexpensive configuration.

### MEASURES TO SOLVE THE PROBLEM (S)

In order to solve the aforementioned problems, in an apparatus for charging thin-film capacitors for use in a direct current circuit in accordance with claim 1, a direct current power supply supplying direct current to the thin-film capacitors, resistors as current limiting means connected in series to the thin-film capacitors for limiting a current value of direct current supplied from the direct current power supply to the thin-film capacitors, and system selection switches connected in series to the respective thin-film capacitors form a circuit capable of selecting parallel connections at the time of charging or a series connection at the time of discharging.
It is characterized in that, at time of charging, the thin-film capacitors are connected to the respective resistors for preventing overcurrent to charge the respective thin-film capacitors in parallel while at the time of discharging the thin-film capacitors are connected in series irrespective of the resistors, to obtain required voltage and current.

It is to be noted that the gist of the present invention is that charging of thin-film capacitors can optimally be performed and thus provides an initial capacitor type of power supply although control appropriate for specific systems may be required at the time of discharging.

### ADVANTAGES OF THE INVENTION

In accordance with the afore-mentioned apparatus for charging thin-film capacitors of the present invention, an overcurrent prevention circuit is connected in series to thin-film capacitors to be applied to a direct current circuit, whereby at the time of initially charging the thin-film capacitors, current flows from the direct current power supply first to the resistors and then to the thin-film capacitors, and as the result the current to the thin-film capacitors can be limited with the resistors.

Then, when the charging voltage of the thin-film capacitors has reached a set valve, the operating switches may be turned off so complete the initial charging.
Accordingly, the initial charging of the thin-film capacitors can be performed without using an expensive apparatus, such as a charging circuit additionally provided with current regulator function, and hence overcurrent flowing into the thin-film capacitors at the time of initial charging can be prevented with an inexpensive configuration.

### BRIEF DESCRIPTION OF THE DRAWING(S)

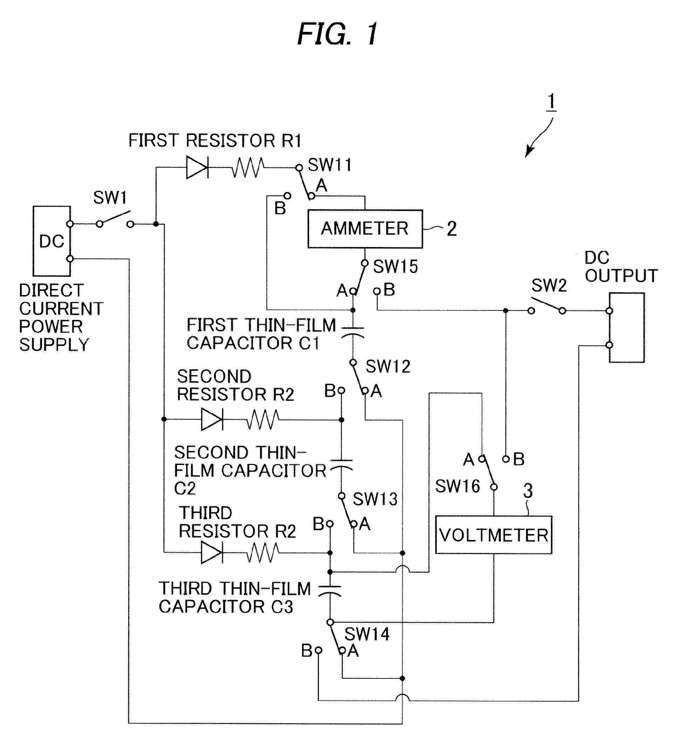

FIG. 1 is a circuit diagram showing a schematic configuration of an apparatus for charging thin-film capacitors in accordance with Embodiment 1.

### LIST OF REFERENCE NUMERALS

1. Circuit diagram of an apparatus for charging thin-film capacitors;
2. Ammeter;
3. Voltmeter;
C1-C3. First to third thin-film capacitors;
DC. Direct current sources;
R1-R3. First to third resistors;
SW1, SW2. Operating switches; and
SW11-SW16. System changeover switches.

### BEST MODE FOR IMPLEMENTING THE INVENTION

In the following, a preferred embodiment of an apparatus for charging thin-film capacitors in accordance with the present invention will be described in more detail by way of an example.

### EMBODIMENT 1

Embodiment 1 of the present invention will be described with reference to FIG. 1.
FIG. 1 is a circuit diagram schematically showing a charging apparatus including three thin-film capacitors.

The embodiment is adapted to start and stop charging from a direct current power supply DC (e.g. 100V) by switching of an operating switch SW1.
To the first, second and third thin-film capacitors C1-C3, there are respectively connected in series first, second and third resistors R1-R3 to restrict respective currents.
Further, system changeover switches SW11-SW16 directly connected to the respective first, second and third thin-film capacitors C1-C3 form a circuit such that contacts A, when selected, establish respective parallel connections and contacts B, when selected, establish a series connection.

In the embodiment, when the operating switch SW2, a switch on the discharging side, is turned off, and the parallel connection is selected for the respective first, second and third thin-film capacitors C1-C3, turning of the operating switch SW1, a charging switch, causes the first, second and third thin-film capacitors C1-C3 to be connected respectively in series to the first, second and third resistors R1-R3, i.e. auxiliary resistors, to thereby prevent overcurrent from flowing at the time of initial discharging of the first second and third-film capacitors C1-C3.

After the completion of charging, the operating switch SW1 used, at the time of charging is turned off, and the contact B of the respective system changeover switches SW11-SW16, i.e. the discharging side where the first, second and third thin-film capacitors C1-C3 are connected in series, are selected. Then, the operating switch SW2 for use at the time of discharging is turned on to thereby connect the first, second and third thin-film capacitors C1-C3 in series to each other so that they can function as a capacitor type of power supply,

### INDUSTRIAL AVAILABILITY

The present invention can be applied to an apparatus for charging thin-film capacitors applicable to a direct current

## Claims

1. An apparatus for charging thin-film capacitors for use in a dlirect current circuit, **characterized by**:
a direct current power supply supplying direct current to the thin-film capacitors;
resistors connected in series to the thin-film supplied from said direct current power supply to the thin-film
system changeover switches connected to the thin-film capacitors for selecting parallel connections and a series connection, whereby all the thin-film capacitors are connected to the resistors for limiting current used at a time of charging to allow charging in the parallel connections, and all the thin-film capacitors are connected in series at a time of discharging to allow discharging.
